# EUROPEAN PATENT SPECIFICATION

(11) **EP 2 782 404 B1**
(45) Date of publication and mention of the grant of the patent: **15.02.2017**
(21) Application number: 12863359.1
(22) Date of filing: 25.12.2012
(51) Int. Cl.: H04W 52/14, H04W 52/16, H04W 52/24, H04W 52/28, H04W 52/38, H04W 52/58, H04W 72/04

(54) **METHOD FOR TRANSMITTING SUBFRAME INFORMATION, USER EQUIPMENT AND BASE STATION**
VERFAHREN ZUR ÜBERTRAGUNG VON SUBFRAMEINFORMATIONEN, BENUTZERGERÄT UND BASISSTATION
PROCÉDÉ DE TRANSMISSION D'INFORMATION DE SOUS-TRAME, ÉQUIPEMENT UTILISATEUR ET STATION DE BASE

(30) Priority: 31.12.2011 CN 201110459105
(43) Date of publication of application: 24.09.2014
(73) Proprietor: Huawei Technologies Co., Ltd., Longgang District Shenzhen, Guangdong 518129 (CN)
(72) Inventor: YANG, Xiaodong, Shenzhen Guangdong 518129 (CN); ZHENG, Juan, Shenzhen Guangdong 518129 (CN); LI, Qiang, Shenzhen Guangdong 518129 (CN); YU, Zheng, Shenzhen Guangdong 518129 (CN)
(74) Representative: Maiwald Patentanwalts GmbH
(86) International application number: PCT/CN2012/087365
(87) International publication number: WO 2013/097685

(56) References cited:
- CN-A- 101 527 593
- CN-A- 102 007 807
- CN-A- 102 137 499
- US-A1- 2009 252 077
- US-A1- 2011 274 064
- US-A1- 2011 319 025

## Description

### TECHNICAL FIELD

Embodiments of the present invention relate to the field of communications, and in particular, to a method, a user equipment, and a base station for transmitting subframe information.

### BACKGROUND

Currently, an ICIC (Inter-Cell Interference Coordination) manner of TDM (Time-Division Multiplexing, time-division multiplexing) is used to implement inter-cell interference coordination. This manner requires an interfering base station to perform power control during data transmission, so as to reduce interference on data transmission of a base station receiving interference. Generally, the interfering base station sets a low data transmission power in some subframes, so as to protect the data transmission of the base station receiving interference. At this time, a subframe where the interfering base station sets a power for protecting the base station receiving interference may be called a first power subframe.

For example, the first power subframe may be an ABS (Almost Blank Subframe, almost blank subframe). The ABS sends data and a relevant control signal by using a low power or a zero power, so as to reduce the interference on the base station receiving interference. Correspondingly, a subframe where the interfering base station normally sets a power not for protecting the base station receiving interference is called a second power subframe. For example, the second power subframe may be a normal (normal) subframe. The first power subframe and the second power subframe are of different subframe types. A base station may configure different subframe types for data transmission of a user equipment according to a channel condition of the user equipment.

For example, in a case where a macro base station and a home NodeB jointly cover some UEs (User Equipment, user equipment), these UEs are not users of the home NodeB, and therefore these UEs cannot access the home NodeB and can only access the macro base station. However, a UE of the macro base station receives severe interference and cannot perform normal communication. Therefore, the home NodeB needs to configure a first power subframe, and the macro base station may schedule the UE that receives severe interference into a subframe corresponding to the first power subframe configured by the home NodeB, so as to perform communication.

For another example, in a case where a macro base station and a Pico base station (pico) coexist, a UE of the Pico receives interference from the macro base station. Therefore, the macro base station needs to configure a first power subframe, and the Pico schedules, at a location of the first power subframe corresponding to the macro base station, the UE receiving interference and served by the Pico, thereby reducing the interference received by the UE that is served by the Pico.

Therefore, for the UE served by the interfering base station, the foregoing two subframe types exist. In the prior art, the UE cannot implement data demodulation or channel state information (Channel State Information, CSI) reporting with respect to different subframe types. US 2011/0319025 A1 describes methods and apparatus for enabling interference coordination in a communication network. A base station includes a plurality of antenna ports. Each antenna port is configured to transmit a reference signal, and each antenna port is associated with a respective cell. The base station determines a set of cells where transmissions of reference signals is to be performed from a reduced set of the plurality of antenna ports. The base station determines a subset of antenna ports in at least one cell of the determined set of cells to enable interference coordination in the network, and transmits the reference signal from the subset of antenna ports.

### SUMMARY

Embodiments of the present invention provide a method, a user equipment, and a base station for transmitting subframe information, so as to enable a UE to recognize different subframe types.

According to one aspect, a method for transmitting subframe information is provided, including: by using radio resource control RRC dedicated signaling, or media access control MAC signaling, or physical layer control signaling, obtaining first information that indicates subframe configuration from a base station; and determining, according to the first information, the subframe configuration, where the subframe configuration identifies a subframe type of a subframe in a subframe set, where the subframe includes at least one first power subframe, and the first power subframe is a subframe for sending data or a control signal by using a low power or a zero power.

According to this aspect, the method for transmitting subframe information further includes: by using radio resource control RRC dedicated signaling, or media access control MAC signaling, or physical layer control signaling, sending first information that indicates subframe configuration to a user equipment UE, so that the UE determines the subframe configuration according to the first information, where the subframe configuration identifies a subframe type of a subframe in a subframe set, where the subframe includes at least one first power
subframe, and the first power subframe is a subframe for sending data or a control signal by using a low power or a zero power.

According to another aspect, a user equipment for transmitting subframe information is provided, including: an obtaining unit, configured to: by using radio resource control RRC dedicated signaling, or media access control MAC signaling, or physical layer control signaling, obtain first information that indicates subframe configuration from a base station; and a determining unit, configured to determine, according to the first information, the subframe configuration, where the subframe configuration identifies a subframe type of a subframe in a subframe set, where the subframe includes at least one first power subframe, and the first power subframe is a subframe for sending data or a control signal by using a low power or a zero power.

According to another aspect, a base station for transmitting subframe information is provided, including: a determining unit, configured to determine first information that indicates subframe configuration; and a sending unit, configured to: by using radio resource control RRC dedicated signaling, or media access control MAC signaling, or physical layer control signaling, send the first information to a user equipment UE, so that the UE determines the subframe configuration according to the first information, where the subframe configuration identifies a subframe type of a subframe in a subframe set, where the subframe includes at least one first power subframe, and the first power subframe is a subframe for sending data or a control signal by using a low power or a zero power.

In the embodiments of the present invention, a base station transmits information that indicates subframe configuration to a UE, so as to enable the UE to recognize different subframe types.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for transmitting subframe information according to an embodiment of the present invention;
FIG. 2 is a schematic flowchart of a method for transmitting subframe information according to another embodiment of the present invention;
FIG. 3 is a schematic flowchart of a method for obtaining subframe energy information according to an embodiment of the present invention;
FIG. 4 is a schematic flowchart of a method for indicating an energy relationship according to an embodiment of the present invention;
FIG. 5 is a block diagram of a user equipment for transmitting subframe information according to an embodiment of the present invention; and
FIG. 6 is a block diagram of a base station for transmitting subframe information according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, for example, a GSM, a Code Division Multiple Access (CDMA, Code Division Multiple Access) system, a Wideband Code Division Multiple Access (WCDMA, Wideband Code Division Multiple Access), a General Packet Radio Service (GPRS, General Packet Radio Service), and a Long Term Evolution (LTE, Long Term Evolution).

A user equipment (UE, User Equipment), which may also be called a mobile terminal (Mobile Terminal), a mobile user equipment, and so on, may communicate with one or more core networks by using a radio access network (for example, RAN, Radio Access Network). The user equipment may be a mobile terminal such as a mobile phone (or called a "cellular" phone) and a computer provided with a mobile terminal, for example, a portable, pocket-sized, handheld, computer-embedded, or vehicle-mounted mobile apparatus, and exchanges voices and/or data with the radio access network.

A base station may be a base transceiver station (BTS, Base Transceiver Station) in GSM or CDMA, and may also be a NodeB (NodeB) in WCDMA, and may further be an evolved Node B (eNB or e-NodeB, evolutional Node B) in LTE, which is not limited in the present invention.

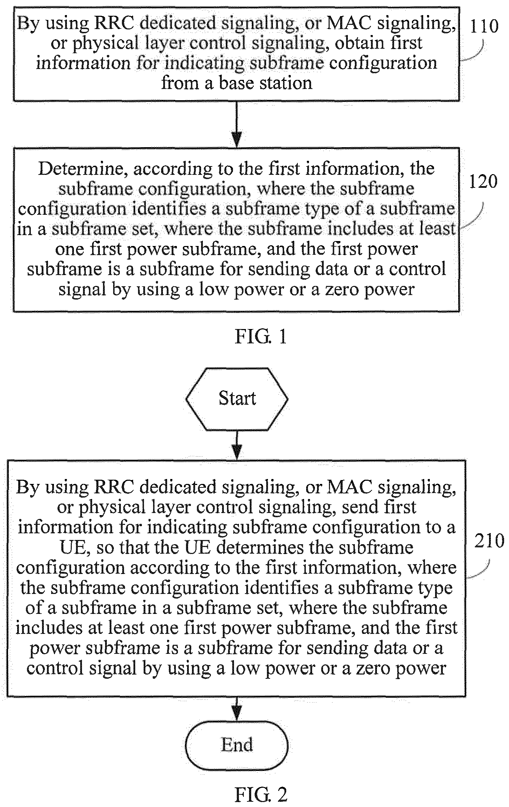

FIG. 1 is a schematic flowchart of a method for transmitting subframe information according to an embodiment of the present invention. The method in FIG. 1 is executed by a UE.

110: By using radio resource control (Radio Resource Control, RRC) dedicated signaling, or media access control (Media Access Control, MAC) signaling, or a physical layer control signaling, obtain first information that indicates subframe configuration from a base station.

120: Determine, according to the first information, the subframe configuration, where the subframe configuration identifies a subframe type of a subframe in a subframe set, where the subframe includes at least one first power subframe, and the first power subframe is a subframe for sending data or a control signal by using a low power or a zero power.

In the embodiment of the present invention, a base station transmits information that indicates subframe configuration to a UE, so as to enable the UE to recognize different subframe types, thereby implementing data demodulation and CSI reporting with respect to different subframes.

It should be understood that, in the embodiment of the present invention, the subframe set may refer to a subframe set formed by subframes included within a time length. The time length may be one radio frame, or multiple radio frames, or one subframe, or a time range formed by multiple subframes. The subframe set may include one or more subframes.

It should be understood that the first power subframe may be a low power ABS, and may also be a zero power ABS. This is not limited by the embodiment of the present invention.

Optionally, as an embodiment, the UE may obtain the first information from the base station by using RRC dedicated signaling. It should be understood that the dedicated signaling may be specific to one UE or one group of UEs. However, broadcast signaling is meant for all UEs within a cell.

Optionally, as another embodiment, the UE may obtain the first information from the base station by using MAC signaling. For example, a mark may be added to a header (header) or a subheader of a MAC protocol data unit (Protocol Data Unit, PDU), where the mark may indicate that the first information is borne by a MAC control element (Control Element) or a MAC service data unit (Service Data Unit, SDU). In other words, a new MAC control element or MAC service data unit may be defined in a MAC PDU, and a bit of the control element or the service data unit is used to bear the first information.

Optionally, as another embodiment, the UE may also obtain the first information from the base station by using physical layer control signaling. For example, a redundant bit (bit) borne in a physical downlink control channel (Physical Downlink Control Channel, PDCCH) or a newly added bit may be used to indicate the subframe configuration. Specifically, information about the redundant bit may be obtained by using the PDCCH that bears paging (Paging) channel scheduling information, or bears SIB1 scheduling information, or bears physical random access channel (Physical random access channel, PRACH) scheduling information. Further, for a time division duplexing (Time Division Duplexing, TDD)/frequency division duplexing (Frequency Division Duplexing, FDD) system, a paging channel is always located in a number 0/number 9 subframe, and therefore the UE may detect a reserved field, namely, the redundant bit, in the PDCCH that schedules the paging channel in the number 0/number 9 subframe, and learn the subframe configuration within a period of time following the number 0/number 9 subframe. In addition, SIB 1 information is transmitted once every 20 ms, that is, transmitted in a number 5 subframe in each even-numbered radio frame, and therefore the UE may similarly detect the reserved field, namely, the redundant bit, in the PDCCH of the SIB1 scheduling information, so as to learn the subframe configuration within a period of time following the number 5 subframe. For a PRACH channel, a similar process also exists; that is, the reserved field of the PRACH channel may be detected to learn the subframe configuration within a period of time. Definitely, the UE may also obtain the first information by using other physical layer signaling. This is not limited by the embodiment of the present invention. In addition, the UE may also obtain the first information from the base station by using RRC broadcast signaling. For example, the RRC broadcast signaling may be borne in the existing RRC broadcast signaling, for example, may be borne in a physical broadcast channel (Physical broadcast channel, PBCH) or a system information block (System information block, SIB), for example, SIB1/SIB-2/SIB-3, so as to indicate the subframe configuration by using redundant bit information, a newly added information element (Information Element, IE), an extension field, or newly added bit information in the existing RRC broadcast signaling. In addition, this signaling may also be borne in other broadcast signaling and this is not limited by the embodiment of the present invention.

In addition, the foregoing signaling may adopt a bitmap (bitmap) form, and may also adopt a form of binary combination. This is not limited by the embodiment of the present invention. For example, when the bitmap form is adopted to indicate the subframe configuration, each bit may be used to indicate a subframe type of a single subframe, for example, indicate that the subframe type is the first power subframe. For example, each bit of X bits may be used to indicate that each subframe of the X subframes is the first power subframe. If multiple subframes appear periodically, each bit of the X bits may be used to indicate that the multiple subframes appearing at intervals of X subframes within the period are the first power subframes.

Optionally, as another embodiment, the UE may obtain second information for data transmission from the base station, where the second information indicates energy per resource element (Energy Per Resource Element, EPRE) for data transmission in a first power subframe. According to the second information, the EPRE for data transmission in the first power subframe is determined.

In the embodiment of the present invention, EPRE for data transmission in a first power subframe is determined according to information obtained by a UE from a base station, so that the UE can correctly use the EPRE for data transmission in the first power subframe to perform data demodulation and detection.

Optionally, as another embodiment, when second information is an upper limit value of EPRE for data transmission in a first power subframe, and the subframe further includes a second power subframe, a UE may obtain the EPRE for data transmission in the second power subframe from a base station, and determine that the smaller one of the upper limit value and the EPRE for data transmission in the second power subframe is the EPRE for data transmission in the first power subframe, where the second power subframe is a subframe for sending data or a control signal by using a normal power. For example, the second power subframe may be a normal subframe.

For example, it is assumed that a system has two base stations, which are respectively a base station 1 and a base station 2, where the base station 1 is a macro (Macro) base station and the base station 2 is a pico (Pico) base station, and an average transmission power of the base station 1 is greater than an average transmission power of the base station 2. In the base station 1, there are two user equipments; one is an edge user equipment UE1, and the other is a central user equipment UE2.

In one aspect, to reduce interference on the base station 2, the base station 1 may set a subframe type of some subframes to low-power transmission subframe or zero-power transmission subframe; and the low-power transmission subframe or zero-power transmission subframe may be called the first power subframe. For example, the base station 1 may set a subframe x to be the low-power transmission subframe or zero-power transmission subframe, and the subframe x is a subframe for which the base station 1 limits a power to protect the data transmission of the base station 2; then the subframe type of the subframe x is the first power subframe.

In another aspect, to protect data transmission of an edge user equipment, the base station 1 needs further to perform data transmission by using a normal transmission power in a normal subframe for the edge user equipment UE1 and the central user equipment UE2. The normal subframe herein means that, in this subframe, the base station 1 does not limit a transmission power required by normal data detection of the edge user equipment UE1 and the central user equipment UE2; this normal subframe may be called the second power subframe. For example, the base station 1 may set the subframe type of a subframe y to the second power subframe. Considering that distances from the UE1 and the UE2 to the base station 1 are different, the transmission power required in the subframe y is different for the UE1 and the UE2; for example, the transmission power required by the UE1 in the subframe y is greater than the transmission power required by the UE2 in the subframe y.

It is assumed that the UE2 is very close to the base station 1 at the beginning, and the base station 1 sets the EPRE for data transmission by UE2 in the subframe y to A. At the same time, the base station 1 sets the upper limit value of the EPRE for data transmission in the subframe x to B. B is the upper limit value of the EPRE that is considered by the base station 1 and does not cause severe interfere to the base station 2. The base station 1 notifies the UE2 by using signaling that the subframe type of the subframe x is the first power subframe, and at this time the UE2 takes the smaller value of A and B as the EPRE for data transmission in the subframe x. When the UE2 is very close to the base station, if A is less than B, the UE2 takes the smaller value A of A and B as the EPRE for data transmission in the subframe x. When the UE2 moves to an edge of a cell, the UE2 is farther and farther from the base station. If the base station 1 sets the value of the EPRE for data transmission by UE2 in the subframe y to C at a geographical location and C is greater than B, the UE2 takes the smaller value B of C and B as the EPRE for data transmission in the subframe x.

In addition, reference may be made to the prior art for a manner for obtaining the EPRE in the second power subframe. The manner is not described herein.

Optionally, as another embodiment, when second information is a difference or ratio between EPRE for data transmission in a first power subframe and the EPRE for data transmission in the second power subframe, and the subframe further includes the second power subframe, the UE may obtain the EPRE for data transmission in the second power subframe from the base station, and according to the EPRE for data transmission in the second power subframe and the difference or according to the EPRE for data transmission in the second power subframe and the ratio, determine the EPRE for data transmission in the first power subframe, where the second power subframe is a subframe for sending data or a control signal by using a normal power. For example, the UE may use the EPRE for data transmission in the second power subframe plus the difference to determine the EPRE for data transmission in the first power subframe. Alternatively, the UE may use the EPRE for data transmission in the second power subframe multiplied by the ratio to determine the EPRE for data transmission in the first power subframe. Reference may be made to the prior art for a manner for obtaining the EPRE in the second power subframe. The manner is not described herein.

Optionally, as another embodiment, second information may be EPRE for data transmission in a first power subframe.

Optionally, as another embodiment, by using the RRC dedicated signaling, or the MAC signaling, or physical layer signaling, a UE may obtain second information from the base station.

For example, the UE may obtain the second information from the base station by using the RRC dedicated signaling. The UE may also obtain the second information from the base station by using the physical layer signaling. For example, a redundant bit or a newly added bit borne in a PDCCH may be used to indicate the second information. Specifically, information about the redundant bit may be obtained by using the PDCCH that bears paging channel scheduling information, or bears SIB1 scheduling information, or bears PRACH scheduling information. Further, for a TDD/FDD system, a paging channel is always located in a number 0/number 9 subframe, and therefore the UE may detect a reserved field, namely, the redundant bit, in the PDCCH that schedules the paging channel in the number 0/number 9 subframe, and learn the second information within a period of time following the number 0/number 9 subframe. In addition, SIB 1 information is transmitted once every 20 ms, that is, transmitted in a number 5 subframe in each even-numbered radio frame, and therefore the UE may similarly detect the reserved field, namely, the redundant bit, in the PDCCH of the SIB1 scheduling information, so as to learn the second information within a period of time following the number 5 subframe. For a PRACH channel, a similar process also exists; that is, the reserved field of the PRACH channel may be detected to learn the second information within a period of time. Definitely, the UE may also obtain the second information by using other physical layer signaling. In addition, the UE may also obtain the second information from the base station by using the MAC signaling. For example, a mark may be added to a header (header) or a subheader of a MAC protocol data unit (Protocol Data Unit, PDU), where the mark may indicate that the second information is borne by a MAC control element (Control Element) or a MAC service data unit (Service Data Unit, SDU). In other words, a new MAC control element or MAC service data unit may be defined in a MAC PDU, and a bit of the control element or the service data unit is used to bear the second information.

In addition, the UE may also obtain the second information from the base station by using the RRC broadcast signaling. The RRC broadcast signaling may be borne in the existing RRC broadcast signaling, for example, may be borne in a PBCH or an SIB, for example, SIB1/SIB-2/SIB-3, so as to indicate the second information by using redundant bit information, a newly added IE, an extension field, or newly added bit information in the existing RRC broadcast signaling. In addition, this signaling may also be borne in other broadcast signaling. This is not limited by the embodiment of the present invention. In addition, the foregoing signaling may adopt a bitmap form, and may also adopt a form of binary combination. This is not limited by the embodiment of the present invention.

It should be understood that, in the embodiment of the present invention, the EPRE for data transmission in the first power subframe is used interchangeably with the power or energy of a physical resource for data transmission in the first power subframe; that is, the second information may indicate the power or energy of a physical resource for data transmission in the first power subframe. The EPRE for data transmission in the second power subframe may also be used interchangeably with the power or energy of a physical resource for data transmission in the second power subframe. The physical resource may be at least one of a resource element (Resource Element, RE), a physical resource block (Physical Resource Block, PRB), a subband (Subband), a carrier, a time symbol (Symbol), and a timeslot. This is not limited by the embodiment of the present invention.

FIG. 2 is a schematic flowchart of a method for transmitting subframe information according to another embodiment of the present invention. The method in FIG. 2 is executed by a base station.

210: Through RRC dedicated signaling, or MAC signaling, or physical layer control signaling, send first information that indicates subframe configuration to a UE, so that the UE determines the subframe configuration according to the first information, where the subframe configuration identifies a subframe type of a subframe in a subframe set, where the subframe includes at least one first power subframe, and the first power subframe is a subframe for sending data or a control signal by using a low power or a zero power.

In the embodiment of the present invention, a base station transmits information that indicates subframe configuration to a UE, so as to enable the UE to recognize different subframe types, thereby implementing data demodulation and CSI reporting with respect to different subframes.

It should be understood that, in the embodiment of the present invention, the subframe set may refer to a subframe set consisting of subframes included within a time length. The time length may be one radio frame, or multiple radio frames, or one subframe, or a time range consisting of multiple subframes. The subframe set may include one or more subframes.

It should be understood that, the first power subframe may be a low power ABS, and may also be a zero power ABS. This is not limited by the embodiment of the present invention.

Optionally, as an embodiment, the base station may send first information to a UE by using RRC dedicated signaling. It should be understood that, the dedicated signaling may be for one UE or one group of UEs. However, broadcast signaling is for all UEs within a cell. That is, the base station may send the first information to one UE by using the RRC dedicated signaling, and may also send the first information to one group of UEs by using the RRC dedicated signaling.

Optionally, as another embodiment, the base station may send first information to a UE by using MAC signaling. For example, a mark may be added to a header or a subheader of a MAC protocol data unit, where the mark may indicate that the first information is borne by a MAC control element or a MAC service data unit. In other words, a new MAC control element or MAC service data unit may be defined in a MAC PDU, and a bit of the control element or the service data unit is used to bear the first information.

Optionally, as another embodiment, the base station may send first information to a UE by using physical layer control signaling. For example, the base station may use a redundant bit or a newly added bit borne in a PDCCH to indicate subframe configuration. Specifically, information about the redundant bit may be obtained by using the PDCCH that bears paging channel scheduling information, or bears SIB1 scheduling information, or bears PRACH scheduling information. Further, for a TDD/FDD system, a paging channel is always located in a number 0/number 9 subframe, and therefore the base station may set a reserved field, namely, the redundant bit, in the PDCCH that schedules the paging channel in the number 0/number 9 subframe, so as to notify the UE of the subframe configuration within a period of time following the number 0/number 9 subframe. In addition, SIB1 information is transmitted once every 20 ms, that is, transmitted in a number 5 subframe in each even-numbered radio frame, and therefore the base station may similarly set the reserved field, namely, the redundant bit, in the PDCCH of the SIB1 scheduling information, so as to notify the UE of the subframe configuration within a period of time following the number 5 subframe. For a PRACH channel, a similar process also exists; that is, the base station may set the reserved field in the PRACH channel to notify the UE of the subframe configuration within a period of time. Definitely, the base station may also send the first information to the UE by using other physical layer signaling. This is not limited by the embodiment of the present invention.

In addition, the base station may also send the first information to the UE by using RRC broadcast signaling. For example, the RRC broadcast signaling may be borne in the existing RRC broadcast signaling, for example, may be borne in a PBCH or an SIB, for example, SIB1/SIB-2/SIB-3, so as to indicate the subframe configuration by using redundant bit information, a newly added IE, an extension field, or newly added bit information in the existing RRC broadcast signaling. In addition, this signaling may also be borne in other broadcast signaling. This is not limited by the embodiment of the present invention.

In addition, the foregoing signaling may adopt a bitmap form, and may also adopt a form of binary combination. This is not limited by the embodiment of the present invention. For example, when the bitmap form is adopted to indicate the subframe configuration, each bit may be used to indicate a type of a single subframe, for example, indicate that the subframe type is the first power subframe. For example, each bit of X bits may be used to indicate that each subframe of the X subframes is the first power subframe. If multiple subframes appear periodically, each bit of the X bits may be used to indicate that the multiple subframes appearing at intervals of X subframes within the period are the first power subframes.

Optionally, as another embodiment, the base station may also send second information that indicates EPRE for data transmission in a first power subframe to a UE, so that the UE determines the EPRE for data transmission in the first power subframe according to the second information.

In the embodiment of the present invention, EPRE for data transmission in a first power subframe is determined according to information obtained by a UE from a base station, so that the UE can correctly use the EPRE for data transmission in the first power subframe to perform data demodulation and detection.

Optionally, as another embodiment, when the subframe further includes a second power subframe, the base station may send an upper limit value of EPRE for data transmission in a first power subframe to a UE, so that the UE determines that the smaller one of the upper limit value and the EPRE for data transmission in the second power subframe is the EPRE for data transmission in the first power subframe, where the second power subframe is a subframe for sending data or a control signal by using a normal power. For example, the second power subframe may be a normal subframe.

For example, it is assumed that a system has two base stations, which are respectively a base station 1 and a base station 2, where the base station 1 is a macro (Macro) base station and the base station 2 is a pico (Pico) base station, and an average transmission power of the base station 1 is greater than an average transmission power of the base station 2. In the base station 1, there are two user equipments; one is an edge user equipment UE1, and the other is a central user equipment UE2.

In one aspect, to reduce interference on the base station 2, the base station 1 may set a subframe type of some subframes to low-power transmission subframe or zero-power transmission subframe; the low-power transmission subframe or zero-power transmission subframe may be called the first power subframe. For example, the base station 1 may set a subframe x to be the low-power transmission subframe or zero-power transmission subframe, and the subframe x is a subframe for which the base station 1 limits a power to protect the data transmission of the base station 2; then the subframe type of the subframe x is the first power subframe.

In another aspect, to protect the data transmission of an edge user equipment, the base station 1 needs further to perform the data transmission by using a normal transmission power in a normal subframe for the edge user equipment UE1 and the central user equipment UE2. The normal subframe herein means that, in this subframe, the base station 1 does not limit a transmission power required by normal data detection of the edge user equipment UE1 and the central user equipment UE2; this normal subframe may be called the second power subframe. For example, the base station 1 may set the subframe type of a subframe y to the second power subframe. Considering that distances from the UE1 and the UE2 to the base station 1 are different, the transmission power required in the subframe y is different for the UE1 and the UE2; for example, the transmission power required by the UE1 in the subframe y is greater than the transmission power required by the UE2 in the subframe y.

It is assumed that, the UE2 is very close to the base station 1 at first, and the base station 1 sets the EPRE for data transmission by UE2 in the subframe y to A. At the same time, the base station sets the upper limit value of the EPRE for data transmission in the subframe x to B. B is the upper limit value of the EPRE that is considered by the base station 1 and does not cause severe interfere to the base station 2. The base station 1 notifies the UE2 by using signaling that the subframe type of the subframe x is the first power subframe, and at this time the UE2 takes the smaller value of A and B as the EPRE for data transmission in the subframe x. When the UE2 is very close to the base station, if A is less than B, the UE2 takes the smaller value A of A and B as the EPRE for data transmission in the subframe x. When the UE2 moves to an edge of a cell, the UE2 is farther and farther from the base station. If the base station 1 sets the value of the EPRE for data transmission by UE2 in the subframe y to C at a geographical location and C is greater than B, the UE2 takes the smaller value B of C and B as the EPRE for data transmission in the subframe x.

In addition, reference may be made to the prior art for a manner for obtaining the EPRE in the second power subframe. The manner is not described herein.

Optionally, as another embodiment, when the subframe further includes a second power subframe, the base station may send a difference or ratio between EPRE for data transmission in a first power subframe and the EPRE for data transmission in the second power subframe to a UE, where the second power subframe is a subframe for sending data or a control signal by using a normal power. Reference may be made to the prior art for a manner for obtaining the EPRE in the second power subframe. The manner is not described herein.

Optionally, as another embodiment, the base station may send EPRE for data transmission in a first power subframe to a UE.

Optionally, as another embodiment, by using RRC dedicated signaling, or MAC signaling, or physical layer control signaling, the base station may send second information to a UE.

For example, the base station may send the second information to the UE by using the RRC dedicated signaling. The base station may also send the second information to the UE by using physical layer signaling. For example, a redundant bit or a newly added bit borne in a PDCCH may be used to indicate the second information. Specifically, information about the redundant bit may be obtained by using the PDCCH that bears paging channel scheduling information, or bears SIB 1 scheduling information, or bears PRACH scheduling information. Further, for a TDD/FDD system, a paging channel is always located in a number 0/number 9 subframe, and therefore the base station may set a reserved field, namely, the redundant bit, in the PDCCH that schedules the paging channel in the number 0/number 9 subframe, so as to send the second information within a period of time following the number 0/number 9 subframe to the UE. In addition, SIB1 information is transmitted once every 20 ms, that is, transmitted in a number 5 subframe in each even-numbered radio frame, and therefore the base station may similarly set the reserved field, namely, the redundant bit, in the PDCCH of the SIB1 scheduling information, so as to send the second information within a period of time following the number 5 subframe to the UE. For a PRACH channel, a similar process also exists; that is, the base station may set the reserved field in the PRACH channel to send the second information to the UE. Definitely, the base station may also send the second information to the UE by using other physical layer signaling.

In addition, the base station may also send the second information to the UE by using the MAC signaling. For example, a mark may be added to a header or a subheader of a MAC protocol data unit, where the mark may indicate that the first information is borne by a MAC control element or a MAC service data unit. In other words, a new MAC control element or MAC service data unit may be defined in a MAC PDU, and a bit of the control element or the service data unit is used to bear the first information.

In addition, the base station may also send the second information to the UE by using RRC broadcast signaling. The RRC broadcast signaling may be borne in the existing RRC broadcast signaling, for example, may be borne in a PBCH or an SIB, for example, SIB1/SIB-2/SIB-3, so as to indicate the second information by using redundant bit information, a newly added IE, an extension field, or newly added bit information in the existing RRC broadcast signaling. In addition, this signaling may also be borne in other broadcast signaling. This is not limited by the embodiment of the present invention. In addition, the foregoing signaling may adopt a bitmap form, and may also adopt a form of binary combination. This is not limited by the embodiment of the present invention.

It should be understood that, in the embodiment of the present invention, the EPRE for data transmission in the first power subframe may also be used interchangeably with the power or energy of a physical resource for data transmission in the first power subframe; that is, the second information may indicate the power or energy of a physical resource for data transmission in the first power subframe. The EPRE for data transmission in the second power subframe may also be used interchangeably with the power or energy of a physical resource for data transmission in the second power subframe. The physical resource may be at least one of a resource element, a physical resource block, a subband, a carrier, a time symbol, and a timeslot. This is not limited by the embodiment of the present invention.

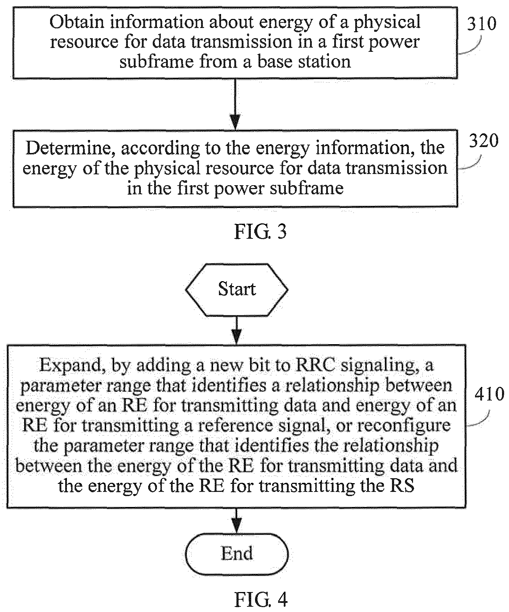

FIG. 3 is a schematic flowchart of a method for obtaining subframe energy information according to an embodiment of the present invention.

310: Obtain information about energy of a physical resource for data transmission in a first power subframe from a base station.

320: Determine, according to the energy information, the energy of the physical resource for data transmission in the first power subframe.

In the embodiment of the present invention, by using information about energy of a physical resource for data transmission in a first power subframe, the energy of the physical resource for data transmission in the first power subframe is determined, so that a UE can correctly use the energy of the physical resource for data transmission in the first power subframe to perform data demodulation and detection.

Optionally, as an embodiment, a UE may determine the energy of the physical resource for data transmission in a second power subframe, and determine, according to the information about the energy of the physical resource for data transmission in the first power subframe and the energy of the physical resource for data transmission in the second power subframe, the energy of the physical resource for data transmission in the first power subframe.

Optionally, as an embodiment, if the information about the energy of the physical resource for data transmission in the first power subframe is an upper limit value of the energy or a lower limit value of the energy of the physical resource for data transmission in the first power subframe, a UE may determine that the smaller one of the upper limit value of the energy and the energy of the physical resource for data transmission in the second power subframe is the energy of the physical resource for data transmission in the first power subframe, or may determine that the greater one of the lower limit value of the energy and the energy of the physical resource for data transmission in the second power subframe is the energy of the physical resource for data transmission in the first power subframe.

Optionally, as another embodiment, if the information about the energy of the physical resource for data transmission in the first power subframe is a difference or ratio between the energy of the physical resource for data transmission in the first power subframe and the energy of the physical resource for data transmission in the second power subframe, a UE may determine, according to the energy of the physical resource for data transmission in the first power subframe and the difference, or the energy of the physical resource for data transmission in the first power subframe and the ratio, the energy of the physical resource for data transmission in the first power subframe.

Optionally, as another embodiment, the information about the energy of the physical resource for data transmission in the first power subframe may be the energy of the physical resource for data transmission in the first power subframe.

Optionally, as another embodiment, by using RRC broadcast signaling, or RRC dedicated signaling, or MAC signaling, or physical layer control signaling, a UE may obtain the information about the energy for data transmission in the first power subframe from the base station.

Optionally, as another embodiment, the first power subframe may be an ABS. The second power subframe may be a normal subframe.

Optionally, as another embodiment, the physical resource may be at least one of a resource element, a physical resource block, a subband, a carrier, a time symbol, and a timeslot.

In the embodiment of the present invention, by using information about energy of a physical resource for data transmission in a first power subframe, the energy of the physical resource for data transmission in the first power subframe is determined, so that a UE can correctly use the energy of the physical resource for data transmission in the first power subframe to perform data demodulation and detection.

FIG. 4 is a schematic flowchart of a method for indicating an energy relationship according to an embodiment of the present invention.

410: Expand, by adding a new bit to RRC signaling, a parameter range that identifies a relationship between energy of an RE for transmitting data and energy of an RE for transmitting a reference signal (Reference Signal, RS), or reconfigure the parameter range that identifies the relationship between the energy of the RE for transmitting data and the energy of the RE for transmitting the RS.

For example, in the LTE prior art, a parameter p-a is used to identify a ratio (or difference) between the (average) energy of the RE for transmitting data and the (average) energy of the RE for transmitting the RS. Generally, the ratio between the energy uses decibel as a unit. A base station may use signaling to notify a UE of the energy of the RE for transmitting the RS. Therefore, according to the ratio, which is indicated by the p-a, between the energy of the RE for transmitting data and the energy of the RE for transmitting the RS, the UE may obtain the (average) energy of the RE for transmitting data.

In the prior art, the p-a may indicate eight ratios, that is,
p-aENUMERATED {dB-6, dB-4dot77, dB-3, dB-1dot77, dB0, dB1, dB2, dB3}.

The base station may replace the ratio, which is indicated by the existing p-a parameter, between energies, so that the p-a may indicate the ratio between greater energies. For example, a new p-a is defined and used to indicate ratios between eight energies, for example, p-a ENUMERATED {dB-12, dB-10, dB-8, dB-6, dB-4, dB-2, dB0, dB2}.

In addition, the base station may expand a range of the ratios, which are indicated by the existing p-a parameter, between energies, so that the p-a may indicate the ratio between greater energies. For example, a new p-a is defined and used to indicate ratios between 16 energies, for example,
p-a ENUMERATED {dB-12, dB-11, dB-10, dB-9, dB-8, dB-7, dB-6, dB-4dot77, dB-3, dB-1dot77, dB0, dB1, dB2, dB3, dBx1, dBx2}.

The dBx1 and dBx2 represent ratios between reserved energies.

In addition, a new bit needs to be added to dedicated signaling for notifying the p-a, so as to expand the indication range of the p-a. That is, when that the p-a in the prior art can indicate ratios between eight energies is expanded to that the p-a can indicate ratios between 16 energies, one bit needs to be newly added and used to indicate a specific value of the p-a.

In addition, the base station sends the value of the p-a to the UE by using the dedicated signaling, and therefore the newly defined p-a may be applied to a UE of a new version.

In the embodiment of the present invention, a parameter in the prior art is used to indicate an energy ratio, so that a base station may perform data transmission/scheduling for a UE by using a less power, thereby reducing interference between base stations.

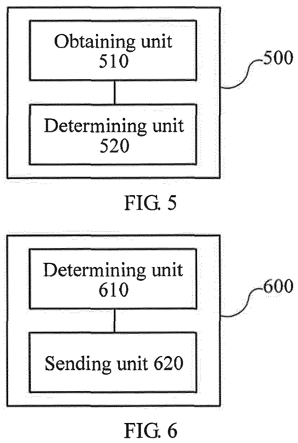

FIG. 5 is a block diagram of a user equipment for transmitting subframe information according to an embodiment of the present invention. A user equipment 500 includes an obtaining unit 510 and a determining unit 520. As an implementation manner, the obtaining unit 510 may be a receiver, and the determining unit 520 may be a processor.

Through RRC dedicated signaling, or MAC signaling, or physical layer control signaling, the obtaining unit 510 obtains first information that indicates subframe configuration from a base station. The determining unit 520 determines, according to the first information, the subframe configuration, where the subframe configuration identifies a subframe type of a subframe in a subframe set, where the subframe includes at least one first power subframe, and the first power subframe is a subframe for sending data or a control signal by using a low power or a zero power.

In the embodiment of the present invention, a base station transmits information that indicates subframe configuration to a UE, so as to enable the UE to recognize different subframe types, thereby implementing data demodulation and CSI reporting with respect to different subframes.

For another function and operation of the user equipment 500, reference may be made to a process that involves a UE in the method embodiment in FIG. 1. To avoid repetition, detailed description is not provided again.

Optionally, as an embodiment, the obtaining unit 510 may also obtain second information from a base station, where the second information indicates EPRE for data transmission in a first power subframe. The determining unit 520 may also determine, according to the second information, the EPRE for data transmission in the first power subframe.

In the embodiment of the present invention, EPRE for data transmission in a first power subframe is determined according to information obtained by a UE from a base station, so that the UE can correctly use the EPRE for data transmission in the first power subframe to perform data demodulation and detection.

Optionally, as another embodiment, when the second information obtained by the obtaining unit 510 is an upper limit value of EPRE for data transmission in a first power subframe, and the subframe further includes a second power subframe, the obtaining unit 510 may also obtain the EPRE for data transmission in the second power subframe from a base station. The determining unit 520 may determine that the smaller one of the upper limit value and the EPRE for data transmission in the second power subframe is the EPRE for data transmission in the first power subframe, where the second power subframe is a subframe for sending data or a control signal by using a normal power.

Optionally, as another embodiment, when the second information obtained by the obtaining unit 510 is a difference or ratio between EPRE for data transmission in a first power subframe and the EPRE for data transmission in the second power subframe, and the subframe further includes the second power subframe, the obtaining unit 510 may also obtain the EPRE for data transmission in the second power subframe from a base station. The determining unit 520 may determine, according to the EPRE for data transmission in the second power subframe and the difference, or according to the EPRE for data transmission in the second power subframe and the ratio, the EPRE for data transmission in the first power subframe, where the second power subframe is a subframe for sending data or a control signal by using a normal power.

Optionally, as another embodiment, the second information obtained by the obtaining unit 510 may be EPRE for data transmission in a first power subframe.

Optionally, as another embodiment, by using RRC signaling, or MAC signaling, or physical layer signaling, the obtaining unit 510 may obtain second information from a base station.

FIG. 6 is a block diagram of a base station for transmitting subframe information according to an embodiment of the present invention. A base station 600 includes a determining unit 610 and a sending unit 620. As an implementation manner, the determining unit 610 may be a processor, and the sending unit 620 may be a transmitter.

The determining unit 610 determines first information that indicates subframe configuration. Through RRC dedicated signaling, or MAC signaling, or physical layer control signaling, the sending unit 620 sends first information to a UE, so that the UE determines the subframe configuration according to the first information, where the subframe configuration identifies a subframe type of a subframe in a subframe set, where the subframe includes at least one first power subframe, and the first power subframe is a subframe for sending data or a control signal by using a low power or a zero power.

In the embodiment of the present invention, a base station transmits information that indicates subframe configuration to a UE, so as to enable the UE to recognize different subframe types, thereby implementing data demodulation and CSI reporting with respect to different subframes.

For another function and operation of the base station 600, reference may be made to a process that involves a base station in the method embodiment in FIG. 2. To avoid repetition, detailed description is not provided again.

Optionally, as an embodiment, the sending unit 620 may also send second information to a UE, where the second information indicates EPRE for data transmission in a first power subframe, so that the UE determines the EPRE for data transmission in the first power subframe according to the second information.

In the embodiment of the present invention, EPRE for data transmission in a first power subframe is determined according to information obtained by a UE from a base station, so that the UE can correctly use the EPRE for data transmission in the first power subframe to perform data demodulation and detection.

Optionally, as another embodiment, when the subframe further includes a second power subframe, the sending unit 620 may send an upper limit value of EPRE for data transmission in a first power subframe to a UE, so that the UE determines that the smaller one of the upper limit value and the EPRE for data transmission in the second power subframe is the EPRE for data transmission in the first power subframe, where the second power subframe is a subframe for sending data or a control signal by using a normal power.

Optionally, as another embodiment, when the subframe further includes a second power subframe, the sending unit 620 may send a difference or ratio between EPRE for data transmission in a first power subframe and the EPRE for data transmission in the second power subframe to a UE, where the second power subframe is a subframe for sending data or a control signal by using a normal power.

Optionally, as another embodiment, the sending unit 620 may send EPRE for data transmission in a first power subframe to a UE.

Optionally, as another embodiment, by using RRC dedicated signaling, or MAC signaling, or physical layer control signaling, the sending unit 620 may send second information to a UE.

A communications system according to an embodiment of the present invention may include the user equipment 500 or the base station 600.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for transmitting subframe information from a base station to a user equipment, UE, comprising:
sending (210), by the base station, first information that indicates subframe configuration to the user equipment, UE, through radio resource control, RRC, dedicated signaling, media access control, MAC, signaling, or physical layer control signaling, wherein the subframe configuration is determined by the UE according to the first information, the subframe configuration identifies a subframe type of a subframe in a subframe set, the subframe comprises a first power subframe, and the first power subframe is a subframe for sending data or a control signal by using a low power or a zero power;
sending, by the base station, second information to the UE, wherein the second information indicates energy per resource element, EPRE, for data transmission in the first power subframe and the EPRE for data transmission in the first power subframe is determined by the UE according to the second information;
obtaining (110), by the user equipment, first information that indicates subframe configuration from the base station through radio resource control, RRC, dedicated signaling, media access control, MAC, signaling, or physical layer control signaling;
determining (120), by the user equipment, the subframe configuration, according to the first information, wherein the subframe configuration identifies a subframe type of a subframe in a subframe set, the subframe comprises a first power subframe, and the first power subframe is a subframe for sending data or a control signal by using a low power or a zero power;
obtaining (310), by the user equipment, second information from the base station, wherein the second information indicates energy per resource element, EPRE, for data transmission in the first power subframe; and
determining (320), by the user equipment, the EPRE for data transmission in the first power subframe according to the second information.

2. The method according to claim 1, wherein when the second information is an upper limit value of the EPRE for data transmission in the first power subframe, and the subframe further comprises a second power subframe, the determining (320) the EPRE for data transmission in the first power subframe comprising:
obtaining EPRE for data transmission in the second power subframe from the base station; and
determining that the smaller one of the upper limit value and the EPRE for data transmission in the second power subframe is the EPRE for data transmission in the first power subframe;
wherein the second power subframe is a subframe for sending data or a control signal by using a normal power.

3. The method according to claim 1, wherein when the second information is a difference or ratio between the EPRE for data transmission in the first power subframe and EPRE for data transmission in a second power subframe, and the subframe further comprises the second power subframe, the determining (320) the EPRE for data transmission in the first power subframe comprises:
obtaining the EPRE for data transmission in the second power subframe from the base station; and
determining, according to the EPRE for data transmission in the second power subframe and the difference, or according to the EPRE for data transmission in the second power subframe and the ratio, the EPRE for data transmission in the first power subframe;
wherein the second power subframe is a subframe for sending data or a control signal by using a normal power.

4. The method according to claim 1, wherein the second information is the EPRE for data transmission in the first power subframe.

5. The method according to claim 1, wherein when the subframe further comprises a second power subframe, the sending second information to the UE comprises:
sending an upper limit value of the EPRE for data transmission in the first power subframe to the UE, so that the UE determines that the smaller one of the upper limit value and EPRE for data transmission in the second power subframe is the EPRE for data transmission in the first power subframe;
wherein the second power subframe is a subframe for sending data or a control signal by using a normal power.

6. The method according to claim 1, wherein when the subframe further comprises a second power subframe, the sending second information to the UE comprises:
sending a difference or ratio between the EPRE for data transmission in the first power subframe and EPRE for data transmission in the second power subframe to the UE;
wherein the second power subframe is a subframe for sending data or a control signal by using a normal power.

7. The method according to claim 1, wherein the sending second information to the UE comprises:
sending the EPRE for data transmission in the first power subframe to the UE.

8. A user equipment (500), comprising:
an obtaining unit (510), configured to obtain first information that indicates subframe configuration from a base station (600) through radio resource control RRC dedicated signaling, or media access control MAC signaling, or physical layer control signaling; and
a determining unit (520), configured to determine, according to the first information, the subframe configuration, wherein the subframe configuration identifies a subframe type of a subframe in a subframe set, the subframe comprises a first power subframe, and the first power subframe is a subframe for sending data or a control signal by using a low power or a zero power;
wherein the obtaining unit (510) is further configured to obtain second information from the base station (600), wherein the second information indicates energy per resource element EPRE for data transmission in the first power subframe; and
the determining unit (520) is further configured to determine, according to the second information, the EPRE for data transmission in the first power subframe.

9. The user equipment (500) according to claim 8, wherein when the second information obtained by the obtaining unit (510) is an upper limit value of the EPRE for data transmission in the first power subframe, and the subframe further comprises a second power subframe,
the obtaining unit (510) is further configured to obtain EPRE for data transmission in the second power subframe from the base station (600); and
the determining unit (520) is further configured to determine that the smaller one of the upper limit value and the EPRE for data transmission in the second power subframe is the EPRE for data transmission in the first power subframe;
wherein the second power subframe is a subframe for sending data or a control signal by using a normal power.

10. The user equipment (500) according to claim 8, wherein when the second information obtained by the obtaining unit (510) is a difference or ratio between the EPRE for data transmission in the first power subframe and EPRE for data transmission in a second power subframe, and the subframe further comprises a second power subframe,
the obtaining unit (510) is further configured to obtain the EPRE for data transmission in the second power subframe from the base station (600); and
the determining unit (520) is specifically configured to determine, according to the EPRE for data transmission in the second power subframe and the difference, or according to the EPRE for data transmission in the second power subframe and the ratio, the EPRE for data transmission in the first power subframe;
wherein the second power subframe is a subframe for sending data or a control signal by using a normal power.

11. The user equipment (500) according to claim 8, wherein the second information obtained by the obtaining unit (510) is the EPRE for data transmission in the first power subframe.

12. A base station (600), comprising:
a determining unit (610), configured to determine first information that indicates subframe configuration; and
a sending unit (620), configured to: send the first information to a user equipment UE (500) through radio resource control RRC dedicated signaling, media access control MAC signaling, or physical layer control signaling, wherein the subframe configuration is determined by the UE according to the first information, the subframe configuration identifies a subframe type of a subframe in a subframe set, the subframe comprises a first power subframe, and the first power subframe is a subframe for sending data or a control signal by using a low power or a zero power;
wherein the sending unit (620) is further configured send second information to the UE, the second information indicates energy per resource element EPRE for data transmission in the first power subframe and the EPRE for data transmission in the first power subframe is determined by the UE according to the second information.

13. The base station (600) according to claim 12, wherein when the subframe further comprises a second power subframe, the sending unit (620) is further configured to send an upper limit value of the EPRE for data transmission in the first power subframe to the UE;
wherein the UE determines that the smaller one of the upper limit value and EPRE for data transmission in the second power subframe is the EPRE for data transmission in the first power subframe and the second power subframe is a subframe for sending data or a control signal by using a normal power.

14. The base station (600) according to claim 12, wherein when the subframe further comprises a second power subframe, the sending unit (620) is further configured to send a difference or ratio between the EPRE for data transmission in the first power subframe and EPRE for data transmission in the second power subframe to the UE, wherein the second power subframe is a subframe for sending data or a control signal by using a normal power.

15. The base station (600) according to claim 12, wherein the sending unit (620) is further configured to send the EPRE for data transmission in the first power subframe to the UE.

## Patentansprüche

1. Verfahren zur Übertragung von Subframeinformationen von einer Basisstation an ein Benutzergerät (UE, "User Equipment"), umfassend:
Senden (210), von der Basisstation, von ersten Informationen, welche eine Subframekonfiguration an das Benutzergerät (UE, "User Equipment") durch dedizierte "Radio Resource Control" (RRC)-Signalisierung, "Media Access Control" (MAC)-Signalisierung oder Physikalische-Schicht-Steuerungssignalisierung anzeigen, wobei die Subframekonfiguration vom UE gemäß der ersten Informationen bestimmt wird, die Subframekonfiguration einen Subframetyp von einem Subframe in einem Subframesatz identifiziert, der Subframe einen ersten Leistungssubframe umfasst und der erste Leistungssubframe ein Subframe zum Senden von Daten oder eines Steuersignals unter Verwendung von einer niedrigen Leistung oder einer Leistung von Null ist;
Senden, von der Basisstation, von zweiten Informationen an das UE, wobei die zweiten Informationen die Energie pro Ressourcenelement (EPRE) für die Datenübertragung im ersten Leistungssubframe anzeigen und die EPRE für die Datenübertragung im ersten Leistungssubframe vom UE gemäß den zweiten Informationen bestimmt wird;
Erhalten (110), vom Benutzergerät, von ersten Informationen, welche eine Subframekonfiguration von der Basisstation durch dedizierte "Radio Resource Control" (RRC)-Signalisierung, "Media Access Control" (MAC)-Signalisierung oder Physikalische-Schicht-Steuerungssignalisierung anzeigen;
Bestimmen (120), durch das Benutzergerät, der Subframekonfiguration gemäß den ersten Informationen, wobei die Subframekonfiguration einen Subframetyp von einem Subframe in einem Subframesatz identifiziert, der Subframe einen ersten Leistungssubframe umfasst und der erste Leistungssubframe ein Subframe zum Senden von Daten oder eines Steuersignals unter Verwendung von einer niedrigen Leistung oder einer Leistung von Null ist;
Erhalten (310), vom Benutzergerät, von zweiten Informationen von der Basisstation, wobei die zweiten Informationen die Energie pro Ressourcenelement (EPRE) für die Datenübertragung im ersten Leistungssubframe anzeigen; und
Bestimmen (320), durch das Benutzergerät, der EPRE für die Datenübertragung im ersten Leistungssubframe gemäß den zweiten Informationen.

2. Verfahren nach Anspruch 1, wobei, wenn die zweiten Informationen ein oberer Grenzwert der EPRE für die Datenübertragung im ersten Leistungssubframe sind und der Subframe ferner einen zweiten Leistungssubframe umfasst, das Bestimmen (320) der EPRE für die Datenübertragung im ersten Leistungssubframe umfasst:
Erhalten der EPRE für die Datenübertragung im zweiten Leistungssubframe von der Basisstation; und
Bestimmen, dass der kleinere Wert von dem oberen Grenzwert und der EPRE für die Datenübertragung im zweiten Leistungssubframe die EPRE für die Datenübertragung im ersten Leistungssubframe ist;
wobei der zweite Leistungssubframe ein Subframe für das Senden von Daten oder eines Steuersignals unter Verwendung einer normalen Leistung ist.

3. Verfahren nach Anspruch 1, wobei, wenn die zweiten Informationen eine Differenz oder ein Verhältnis zwischen der EPRE für die Datenübertragung im ersten Leistungssubframe und der EPRE für die Datenübertragung in einem zweiten Leistungssubframe sind und der Subframe ferner den zweiten Leistungssubframe umfasst, das Bestimmen (320) der EPRE für die Datenübertragung im ersten Leistungssubframe umfasst:
Erhalten der EPRE für die Datenübertragung im zweiten Leistungssubframe von der Basisstation; und
Bestimmen, gemäß der EPRE für die Datenübertragung im zweiten Leistungssubframe und der Differenz oder gemäß der EPRE für die Datenübertragung im zweiten Leistungssubframe und dem Verhältnis, der EPRE für die Datenübertragung im ersten Leistungssubframe;
wobei der zweite Leistungssubframe ein Subframe für das Senden von Daten oder eines Steuersignals unter Verwendung einer normalen Leistung ist.

4. Verfahren nach Anspruch 1, wobei die zweiten Informationen die EPRE für die Datenübertragung im ersten Leistungssubframe sind.

5. Verfahren nach Anspruch 1, wobei, wenn der Subframe ferner einen zweiten Leistungssubframe umfasst, das Senden der zweiten Informationen an das UE umfasst:
Senden eines oberen Grenzwerts der EPRE für die Datenübertragung im ersten Leistungssubframe an das UE, so dass das UE bestimmt, dass der kleinere Wert von dem oberen Grenzwert und der EPRE für die Datenübertragung im zweiten Leistungssubframe die EPRE für die Datenübertragung im ersten Leistungssubframe ist;
wobei der zweite Leistungssubframe ein Subframe für das Senden von Daten oder eines Steuersignals unter Verwendung einer normalen Leistung ist.

6. Verfahren nach Anspruch 1, wobei, wenn der Subframe ferner einen zweiten Leistungssubframe umfasst, das Senden der zweiten Informationen an das UE umfasst:
Senden einer Differenz oder eines Verhältnisses zwischen der EPRE für die Datenübertragung im ersten Leistungssubframe und der EPRE für die Datenübertragung im zweiten Leistungssubframe an das UE;
wobei der zweite Leistungssubframe ein Subframe für das Senden von Daten oder eines Steuersignals unter Verwendung einer normalen Leistung ist.

7. Verfahren nach Anspruch 1, wobei das Senden der zweiten Informationen an das UE umfasst:
Senden der EPRE für die Datenübertragung im ersten Leistungssubframe an das UE.

8. Benutzergerät (500), umfassend:
eine erhaltende Einheit (510), welche ausgelegt ist, um erste Informationen zu erhalten, die eine Subframekonfiguration von einer Basisstation (600) durch dedizierte "Radio Resource Control" (RRC)-Signalisierung oder "Media Access Control" (MAC)-Signalisierung oder Physikalische-Schicht-Steuerungssignalisierung anzeigen; und
eine bestimmende Einheit (520), welche ausgelegt ist, um die Subframekonfiguration gemäß den ersten Informationen zu bestimmen, wobei die Subframekonfiguration einen Subframetyp von einem Subframe in einem Subframesatz identifiziert, der Subframe einen ersten Leistungssubframe umfasst und der erste Leistungssubframe ein Subframe zum Senden von Daten oder eines Steuersignals unter Verwendung von einer niedrigen Leistung oder einer Leistung von Null ist;
wobei die erhaltende Einheit (510) ferner ausgelegt ist, um zweite Informationen von der Basisstation (600) zu erhalten, wobei die zweiten Informationen die Energie pro Ressourcenelement (EPRE) für die Datenübertragung im ersten Leistungssubframe anzeigen; und
die bestimmende Einheit (520) ferner ausgelegt ist, um die EPRE für die Datenübertragung im ersten Leistungssubframe gemäß den zweiten Informationen zu bestimmen.

9. Benutzergerät (500) nach Anspruch 8, wobei, wenn die zweiten Informationen, welche von der erhaltenden Einheit (510) erhalten werden, ein oberer Grenzwert der EPRE für die Datenübertragung im ersten Leistungssubframe sind und der Subframe ferner einen zweiten Leistungssubframe umfasst,
die erhaltende Einheit (510) ferner ausgelegt ist, um die EPRE für die Datenübertragung im zweiten Leistungssubframe von der Basisstation (600) zu erhalten; und
die bestimmende Einheit (520) ferner ausgelegt ist, um zu bestimmen, dass der kleinere Wert von dem oberen Grenzwert und der EPRE für die Datenübertragung im zweiten Leistungssubframe die EPRE für die Datenübertragung im ersten Leistungssubframe ist;
wobei der zweite Leistungssubframe ein Subframe für das Senden von Daten oder eines Steuersignals unter Verwendung einer normalen Leistung ist.

10. Benutzergerät (500) nach Anspruch 8, wobei, wenn die zweiten Informationen, welche von der erhaltenden Einheit (510) erhalten werden, eine Differenz oder ein Verhältnis zwischen der EPRE für die Datenübertragung im ersten Leistungssubframe und der EPRE für die Datenübertragung in einem zweiten Leistungssubframe sind und der Subframe ferner einen zweiten Leistungssubframe umfasst,
die erhaltende Einheit (510) ferner ausgelegt ist, um die EPRE für die Datenübertragung im zweiten Leistungssubframe von der Basisstation (600) zu erhalten; und
die bestimmende Einheit (520) speziell ausgelegt ist, um, gemäß der EPRE für die Datenübertragung im zweiten Leistungssubframe und der Differenz oder gemäß der EPRE für die Datenübertragung im zweiten Leistungssubframe und dem Verhältnis, die EPRE für die Datenübertragung im ersten Leistungssubframe zu bestimmen; wobei der zweite Leistungssubframe ein Subframe für das Senden von Daten oder eines Steuersignals unter Verwendung einer normalen Leistung ist.

11. Benutzergerät (500) nach Anspruch 8, wobei die zweiten Informationen, welche von der erhaltenden Einheit (510) erhalten werden, die EPRE für die Datenübertragung im ersten Leistungssubframe sind.

12. Basisstation (600), umfassend:
eine bestimmende Einheit (610), welche ausgelegt ist, um erste Informationen zu bestimmen, die die Subframekonfiguration anzeigen;
eine sendende Einheit (620), ausgelegt zum: Senden der ersten Informationen an ein Benutzergerät (UE, "User Equipment") (500) durch dedizierte "Radio Resource Control" (RRC)-Signalisierung, "Media Access Control" (MAC)-Signalisierung oder Physikalische-Schicht-Steuerungssignalisierung, wobei die Subframekonfiguration vom UE gemäß der ersten Informationen bestimmt wird, die Subframekonfiguration einen Subframetyp von einem Subframe in einem Subframesatz identifiziert, der Subframe einen ersten Leistungssubframe umfasst und der erste Leistungssubframe ein Subframe zum Senden von Daten oder eines Steuersignals unter Verwendung von einer niedrigen Leistung oder einer Leistung von Null ist;
wobei die sendende Einheit (620) ferner ausgelegt ist, um zweite Informationen an das UE zu senden, wobei die zweiten Informationen die Energie pro Ressourcenelement (EPRE) für die Datenübertragung im ersten Leistungssubframe anzeigen und die EPRE für die Datenübertragung im ersten Leistungssubframe vom UE gemäß den zweiten Informationen bestimmt wird.

13. Basisstation (600) nach Anspruch 12, wobei, wenn der Subframe ferner einen zweiten Leistungssubframe umfasst, die sendende Einheit (620) ferner ausgelegt ist, um einen oberen Grenzwert der EPRE für die Datenübertragung im ersten Leistungssubframe an das UE zu senden;
wobei das UE bestimmt, dass der kleinere Wert von dem oberen Grenzwert und der EPRE für die Datenübertragung im zweiten Leistungssubframe die EPRE für die Datenübertragung im ersten Leistungssubframe ist und der zweite Leistungssubframe ein Subframe für das Senden von Daten oder eines Steuersignals unter Verwendung einer normalen Leistung ist.

14. Basisstation (600) nach Anspruch 12, wobei, wenn der Subframe ferner einen zweiten Leistungssubframe umfasst, die sendende Einheit (620) ferner ausgelegt ist, um eine Differenz oder ein Verhältnis zwischen der EPRE für die Datenübertragung im ersten Leistungssubframe und der EPRE für die Datenübertragung im zweiten Leistungssubframe an das UE zu senden, wobei der zweite Leistungssubframe ein Subframe für das Senden von Daten oder eines Steuersignals unter Verwendung einer normalen Leistung ist.

15. Basisstation (600) nach Anspruch 12, wobei die sendende Einheit (620) ferner ausgelegt ist, um die EPRE für die Datenübertragung im ersten Leistungssubframe an das UE zu senden.

## Revendications

1. Procédé de transmission d'informations de sous-trame depuis une station de base jusqu'à un équipement utilisateur, UE, comprenant :
l'envoi (210), par la station de base, de premières informations qui indiquent une configuration de sous-trame à l'équipement utilisateur UE par l'intermédiaire d'une signalisation spécialisée de commande de ressource radio, RRC, d'une signalisation de commande d'accès au support, MAC, ou d'une signalisation de commande de couche physique, la configuration de sous-trame étant déterminée par l'équipement utilisateur UE en fonction des premières informations, la configuration de sous-trame identifiant un type de sous-trame appartenant à une sous-trame dans un ensemble de sous-trames, la sous-trame comprend une première sous-trame de puissance, et la première sous-trame de puissance est une sous-trame destinée à envoyer des données ou un signal de commande en utilisant une faible puissance ou une puissance nulle, l'envoi, par la station de base, de secondes informations à l'équipement utilisateur UE,
les secondes informations indiquant l'énergie par élément de ressource, EPRE, pour une transmission de données dans la première sous-trame de puissance ; et l'énergie EPRE pour une transmission de données dans la première sous-trame de puissance est déterminée par l'équipement utilisateur UE en fonction des secondes informations,
la récupération (110) par l'équipement utilisateur, de premières informations qui indiquent une configuration de sous-trame depuis la station de base par l'intermédiaire d'une signalisation spécialisée de commande de ressource radio, RRC, d'une signalisation de commande d'accès au support, MAC, ou d'une signalisation de commande de couche physique,
la détermination (120), par l'équipement utilisateur, de la configuration de sous-trame en fonction des premières informations, la configuration de sous-trame identifiant un type de sous-trame appartenant à une sous-trame dans un ensemble de sous-trames, la sous-trame comprend une première sous-trame de puissance, et la première sous-trame de puissance est une sous-trame destinée à envoyer des données ou un signal de commande en utilisant une faible puissance ou une puissance nulle,
la récupération (310), par l'équipement utilisateur, de secondes informations provenant de la station de base, les secondes informations indiquant l'énergie par élément de ressource, EPRE, pour une transmission de données dans la première sous-trame de puissance, et
la détermination (320), par l'équipement utilisateur, de l'énergie EPRE pour une transmission de données dans la première sous-trame de puissance en fonction des secondes informations.

2. Procédé selon la revendication 1, dans lequel les secondes informations représentent une valeur de limite supérieure de l'énergie EPRE pour une transmission de données dans la première sous-trame de puissance, et la sous-trame comprend en outre une seconde sous-trame de puissance, la détermination (320) de l'énergie EPRE pour une transmission de données dans la première sous-trame de puissance comprenant :
la récupération de l'énergie EPRE pour une transmission de données dans la seconde sous-trame de puissance à partir de la station de base, et
la détermination que la plus petite de la valeur limite supérieure et de l'énergie EPRE pour une transmission de données dans la seconde sous-trame de puissance est l'énergie EPRE pour une transmission de données dans la première sous-trame de puissance,
dans lequel la seconde sous-trame de puissance est une sous-trame destinée à envoyer des données ou un signal de commande en utilisant une puissance normale.

3. Procédé selon la revendication 1, dans lequel, lorsque les secondes informations représentent une différence ou un rapport entre l'énergie EPRE pour une transmission de données dans la première sous-trame de puissance et l'énergie EPRE pour une transmission de données dans une seconde sous-trame de puissance, et que la sous-trame comprend en outre la seconde sous-trame de puissance, la détermination (320) de l'énergie EPRE pour une transmission de données dans la première sous-trame de puissance comprend :
la récupération de l'énergie EPRE pour une transmission de données dans la seconde sous-trame de puissance à partir de la station de base, et
la détermination de l'énergie EPRE pour une transmission de données dans la première sous-trame de puissance, en fonction de l'énergie EPRE pour une transmission de données dans la seconde sous-trame de puissance et de la différence, ou bien en fonction de l'énergie EPRE pour une transmission de données dans la seconde sous-trame de puissance et du rapport,
dans lequel la seconde sous-trame de puissance est une sous-trame destinée à envoyer des données ou un signal de commande en utilisant une puissance normale.

4. Procédé selon la revendication 1, dans lequel les secondes informations représentent l'énergie EPRE pour une transmission de données dans la première sous-trame de puissance.

5. Procédé selon la revendication 1, dans lequel, lorsque la sous-trame comprend en outre une seconde sous-trame de puissance, l'envoi de secondes informations à l'équipement utilisateur UE comprend :
l'envoi à l'équipement utilisateur UE d'une valeur limite supérieure de l'énergie EPRE pour une transmission de données dans la première sous-trame de puissance de telle sorte que l'équipement utilisateur UE détermine que la plus petite de la valeur limite supérieure et de l'énergie EPRE pour une transmission de données dans la seconde sous-trame de puissance est l'énergie EPRE pour une transmission de données dans la première sous-trame de puissance,
dans lequel la seconde sous-trame de puissance est une sous-trame destinée à envoyer des données ou un signal de commande en utilisant une puissance normale.

6. Procédé selon la revendication 1, dans lequel, lorsque la sous-trame comprend en outre une seconde sous-trame de puissance, l'envoi de secondes informations à l'équipement utilisateur UE comprend :
l'envoi à l'équipement utilisateur UE d'une différence ou d'un rapport entre l'énergie EPRE pour une transmission de données dans la première sous-trame de puissance et
l'énergie EPRE pour une transmission de données dans la seconde sous-trame de puissance,
dans lequel la seconde sous-trame de puissance est une sous-trame destinée à envoyer des données ou un signal de commande en utilisant une puissance normale.

7. Procédé selon la revendication 1, dans lequel l'envoi de secondes informations à l'équipement utilisateur UE comprend :
l'envoi à l'équipement utilisateur UE de l'énergie EPRE pour une transmission de données dans la première sous-trame de puissance.

8. Équipement utilisateur (500) comprenant :
une unité de récupération (510) configurée pour récupérer des premières informations qui indiquent une configuration de sous-trame depuis une station de base (600) par l'intermédiaire d'une signalisation spécialisée de commande de ressource radio, RRC, ou d'une signalisation de commande d'accès au support, MAC, ou d'une signalisation de commande de couche physique, et
une unité de détermination (520) configurée pour déterminer, en fonction des premières informations, la configuration de sous-trame, la configuration de sous-trame identifiant un type de sous-trame appartenant à une sous-trame dans un ensemble de sous-trames, la sous-trame comprend une première sous-trame de puissance, et la première sous-trame de puissance est une sous-trame destinée à envoyer des données ou un signal de commande en utilisant une faible puissance ou une puissance nulle,
dans lequel l'unité de récupération (510) est en outre configurée pour récupérer des secondes informations provenant de la station de base (600), les secondes informations indiquant l'énergie par élément de ressource, EPRE, pour une transmission de données dans la première sous-trame de puissance, et
l'unité de détermination (520) est en outre configurée pour déterminer, en fonction des secondes informations, l'énergie EPRE pour une transmission de données dans la première sous-trame de puissance.

9. Équipement utilisateur (500) selon la revendication 8, dans lequel, lorsque les secondes informations récupérées par l'unité de récupération (510) représentent une valeur limite supérieure de l'énergie EPRE pour une transmission de données dans la première sous-trame de puissance et que la sous-trame comprend en outre une seconde sous-trame de puissance,
l'unité de récupération (510) est en outre configurée pour récupérer l'énergie EPRE pour une transmission de données dans la seconde sous-trame de puissance à partir de la station de base (600), et
l'unité de détermination (520) est en outre configurée pour déterminer que la plus petite de la valeur limite supérieure et de l'énergie EPRE pour une transmission de données dans la seconde sous-trame de puissance est l'énergie EPRE pour une transmission de données dans la première sous-trame de puissance,
dans lequel la seconde sous-trame de puissance est une sous-trame destinée à envoyer des données ou un signal de commande en utilisant une puissance normale.

10. Équipement utilisateur (500) selon la revendication 8, dans lequel, lorsque les secondes informations récupérées par l'unité de récupération (510) représentent une différence ou un rapport entre l'énergie EPRE pour une transmission de données dans la première sous-trame de puissance et l'énergie EPRE pour une transmission de données dans une seconde sous-trame de puissance et que la sous-trame comprend en outre une seconde sous-trame de puissance,
l'unité de récupération (510) est en outre configurée pour récupérer l'énergie EPRE pour une transmission de données dans la seconde sous-trame de puissance depuis la station de base (600), et
l'unité de détermination (520) est en particulier configurée pour déterminer, en fonction de l'énergie EPRE pour une transmission de données dans la seconde sous-trame de puissance et de la différence, ou en fonction de l'énergie EPRE pour une transmission de données par la seconde sous-trame de puissance et du rapport, l'énergie EPRE pour une transmission de données dans la première sous-trame de puissance, dans lequel la seconde sous-trame de puissance est une sous-trame destinée à envoyer des données ou un signal de commande en utilisant une puissance normale.

11. Équipement utilisateur (500) selon la revendication 8, dans lequel les secondes informations récupérées par l'unité de récupération (510) représentent l'énergie EPRE pour une transmission de données dans la première sous-trame de puissance.

12. Station de base (600) comprenant :
une unité de détermination (610) configurée pour déterminer des premières informations qui indiquent une configuration de sous-trame, et
une unité d'envoi (620) configurée pour envoyer les premières informations à un équipement utilisateur UE (500) par l'intermédiaire d'une signalisation spécialisée de commande de ressource radio, RRC, d'une signalisation de commande d'accès au support, MAC, ou d'une signalisation de commande de couche physique, la configuration de sous-trame étant déterminée par l'équipement utilisateur UE en fonction des premières informations, la configuration de sous-trame identifiant un type de sous-trame appartenant à une sous-trame dans un ensemble de sous-trames, la sous-trame comprend une première sous-trame de puissance, et la première sous-trame de puissance est une sous-trame destinée à envoyer des données ou un signal de commande en utilisant une faible puissance ou une puissance nulle,
dans laquelle l'unité d'envoi (620) est en outre configurée pour envoyer des secondes informations à l'équipement utilisateur UE, les secondes informations indiquant l'énergie par élément de ressource, EPRE, pour une transmission de données dans la première sous-trame de puissance, et l'énergie EPRE pour une transmission de données dans la première sous-trame de puissance étant déterminée par l'équipement utilisateur UE en fonction des secondes informations.

13. Station de base (600) selon la revendication 12, dans laquelle, lorsque la sous-trame comprend en outre une seconde sous-trame de puissance, l'unité d'envoi (620) est en outre configurée pour envoyer à l'équipement utilisateur UE une valeur limite supérieure de l'énergie EPRE pour une transmission de données dans la première sous-trame de puissance,
dans laquelle l'équipement utilisateur UE détermine que la plus petite de la valeur limite supérieure et de l'énergie EPRE pour une transmission de données dans la seconde sous-trame de puissance est l'énergie EPRE pour une transmission de données dans la première sous-trame de puissance, et la seconde sous-trame de puissance est une sous-trame destinée à envoyer des données ou un signal de commande en utilisant une puissance normale.

14. Station de base (600) selon la revendication 12, dans laquelle, lorsque la sous-trame comprend en outre une seconde sous-trame de puissance, l'unité d'envoi (620) est en outre configurée pour envoyer à l'équipement utilisateur UE une différence ou un rapport entre l'énergie EPRE pour une transmission de données dans la première sous-trame de puissance et l'énergie EPRE pour une transmission de données dans la seconde sous-trame de puissance, la seconde sous-trame de puissance étant une sous-trame destinée à envoyer des données ou un signal de commande en utilisant une puissance normale.

15. Station de base (600) selon la revendication 12, dans laquelle l'unité d'envoi (620) est en outre configurée pour envoyer à l'équipement utilisateur UE l'énergie EPRE pour une transmission de données dans la première sous-trame de puissance.
